# EUROPÄISCHE PATENTSCHRIFT

(11) **EP 4 370 870 B1**
(45) Veröffentlichungstag und Bekanntmachung des Hinweises auf die Patenterteilung: **26.03.2025**
(21) Anmeldenummer: 22830430.9
(22) Anmeldetag: 02.12.2022
(51) Int. Cl.: G01C 21/00, G06F 16/29

(54) **VERSIONIERUNG VON DIGITALEN STRASSENKARTEN**
VERSIONING OF DIGITAL ROAD MAPS
VERSIONER DES CARTES ROUTIERES DIGITALES

(30) Priorität: 25.01.2022 DE 102022000272
(43) Veröffentlichungstag der Anmeldung: 22.05.2024
(73) Patentinhaber: Mercedes-Benz Group AG, 70372 Stuttgart (DE)
(72) Erfinder: MONNINGER, Thomas, Menlo Park, California 94025 (US); ALEKSIC, Mario, 70565 Stuttgart (DE); BRACHT, Alexander, 73730 Esslingen (DE); HURT, Peter, 70794 Filderstadt (DE); SEVERIN, Anja, 71063 Sindelfingen (DE); MINK, Michael, 72119 Ammerbuch (DE); HARR, Maximilian, 71159 Mötzingen (DE); ORTLOFF, Roland, 71116 Gärtringen (DE); HENZLER, Michael, 70563 Stuttgart (DE)
(74) Vertreter: Novagraaf Group
(86) Internationale Anmeldenummer: PCT/EP2022/084265
(87) Internationale Veröffentlichungsnummer: WO 2023/143783

(56) Entgegenhaltungen:
- CN-A- 102 607 576
- DE-A1- 102004 001 797

## Beschreibung

Die Erfindung betrifft ein Verfahren zur Versionierung von digitalen Straßenkarten mittels inkrementeller Aktualisierungen sowie ein Fahrzeug mit einer Recheneinheit zur Durchführung des Verfahrens.

Digitale Straßenkarten werden von Fahrzeugen in mannigfaltiger Weise genutzt. Beispielsweise werden digitale Straßenkarten zur Bestimmung und Präsentation von Navigationsrouten genutzt. In einer digitalen Straßenkarte gespeicherte Informationen können auch zur Steuerung von Fahrzeugfunktionen automatisierter und autonomer Fahrzeuge genutzt werden. Je größer der Automatisierungsgrad des Fahrzeugs, desto genauere Straßenkarteninformationen werden erfordert. Die Informationen sollten zudem so aktuell wie möglich sein.

Hierzu werden digitale Straßenkarten regelmäßig aktualisiert. Diese Aktualisierung erfolgt häufig über Mobilfunk. Zur Reduktion der dabei zu übertragenden Datenmenge werden in diesem Zusammenhang oftmals sogenannte differentielle oder inkrementelle Aktualisierungen genutzt. Dabei wird nicht der vollständige monolithische Datensatz der digitalen Straßenkarte ausgetauscht, sondern es werden lediglich die Unterschiede zwischen der veralteten und der aktuellen Kartenversion eingespielt.

Nachteilig ist dabei jedoch, dass das Verwalten von verschiedenen Versionen der digitalen Straßenkarte mit einem hohen Aufwand verbunden ist. Das Vorhalten verschiedener Kartenversionen kann für einen Kartenhersteller bedeutend sein, da er beispielsweise für verschiedene Kunden verschiedene Karten anbieten möchte. Auch kann das Interesse bestehen für ein und dasselbe geographische Gebiet verschiedene Karten bereitzustellen, beispielsweise für verschiedene Anwendungsfälle. Hierzu können einzelne Kartenversionen in einem sogenannten "Fork" dupliziert werden und dann als separater Kartenstrang weitergeführt werden. Dies erhöht den Aufwand zur Verwaltung verschiedener Kartenversionen noch weiter, da nun beide Kartenstränge gepflegt werden müssen. Dieses Verfahren ist zudem fehleranfällig, da aufgrund des erhöhten manuellen Aufwands auch das Risiko steigt, dass Änderungen an einzelnen Kartenversionen vergessen werden oder falsch implementiert werden.

Ferner ist es nicht möglich, selektive Änderungen in verschiedene Kartenversionen einzuspielen. Es lassen sich also nicht verschiedene Versionen der Karte kombinieren, sondern Änderungen müssen bisher nacheinander eingespielt werden.

Aus der Anmeldung DE 10 2016 219 258 A1 ist ein Verfahren zur Aktualisierung einer digitalen Karte bekannt. Das in der Druckschrift offenbarte Verfahren vereinfacht das Durchführen von inkrementellen Aktualisierungen von in verschiedenen Versionen vorliegenden Karten. Dabei werden in einem Aktualisierungsdatensatz Aktualisierungen für dieselben Kartenobjekte für verschiedene Versionen der Karte gespeichert. Der Umfang eines solchen Aktualisierungsdatensatzes ist dementsprechend groß.

Ferner offenbart die Schrift DE 10 2015 206 519 A1 ein Verfahren zur Aktualisierung von in einzelne Kacheln unterteilten digitalen Straßenkarten mit Hilfe von differentiellen Aktualisierungen. Dabei werden für zu aktualisierende Kartenkacheln nur die Änderungen eingespielt, die noch nicht in der zu aktualisierenden Kartenkachel vorliegen. Auch hier besteht eine festgelegte Reihenfolge, nach der Aktualisierungen in die digitale Straßenkarte eingespielt werden. Die beliebige Kombination von Änderungen ist nicht möglich.

Aus der CN 1 02 607 576 A ist ein Verfahren zum inkrementellen Aktualisieren digitaler Straßenkarten mit einer Versionierung bekannt. Hierbei wird ausgehend von einer initialen Basiskarte eine Hashfunktion auf die Basiskarte angewandt. Auf Basis eines Abgleiches von Hash-Tabellen von Soll- und Ist-Versionen der digitalen Straßenkarte werden Kartendifferenz-Pakete bereitgestellt. Es wird jedoch keine direkte Versionierung der digitalen Straßenkarte offenbart, sondern eine indirekte Versionierung durch Versionierung von Kartenobjekten.

Die Anmeldung DE 10 2004 001 797 A1 zeigt ebenfalls ein Verfahren zum inkrementellen Aktualisieren digitaler Straßenkarten mit einer Versionierung. Hierbei werden Kartendifferenz-Pakete bereitgestellt, welche Änderungen von wenigstens einer Einzeländerung eines Kartenmerkmals umfassen. Nicht offenbart ist die Anwendung einer Hashfunktion auf die Basiskarte zur Erzeugung des Versions-Hashes.

Die US 2021 / 0 026 834 A1 offenbart ein Verfahren zur Überprüfung von Software und Datenupdates für Fahrzeuge basierend auf der Block-Chain-Technologie. Das Verfahren wendet eine Hashfunktion auf initiale Daten sowie weitere gespeicherte Informationen an und erzeugt im Rahmen eines Merkle hash trees dedizierte hashes. Nicht offenbart werden die Bereitstellung von Kartendifferenz-Paketen sowie die Anwendung der Block-Chain-Technologie auf die Versionierung.

Der vorliegenden Erfindung liegt die Aufgabe zugrunde, ein verbessertes Verfahren zur Versionierung von digitalen Straßenkarten mittels inkrementeller Aktualisierungen anzugeben, welches das Verwalten und Nutzen von verschiedenen Versionen der digitalen Straßenkarte mit einem vergleichsweise geringen Aufwand ermöglicht.

Erfindungsgemäß wird diese Aufgabe durch ein Verfahren zur Versionierung von digitalen Straßenkarten mittels inkrementeller Aktualisierungen mit den Merkmalen des Anspruchs 1 gelöst. Vorteilhafte Ausgestaltungen und Weiterbildungen sowie ein Fahrzeug mit einer Recheneinheit ergeben sich aus den hiervon abhängigen Ansprüchen.

Bei einem erfindungsgemäßen Verfahren zur Versionierung von digitalen Straßenkarten mittels inkrementeller Aktualisierungen werden erfindungsgemäß die folgenden Verfahrensschritte ausgeführt:
- Bereitstellen einer Basiskarte;
- Anwenden einer Hashfunktion auf die Basiskarte zur Erzeugung eines Versions-Hashes der Basiskarte;
- Bereitstellen von Kartendifferenz-Paketen, wobei ein Kartendifferenz-Paket wenigstens eine Einzeländerung eines Kartenmerkmals umfasst;
- Versionierung der digitalen Straßenkarte durch Bilden wenigstens einer fortlaufenden Versionskette, beginnend mit der Basiskarte, wobei hierzu:
- zur Erzeugung einer aktuellen Kartenversion ein zu applizierendes Kartendifferenz-Paket mit der in der Versionskette vor der aktuellen Kartenversion befindlichen Kartenversion verknüpft wird, wobei hierzu der Versions-Hash der vorigen Kartenversion und das zu applizierende Kartendifferenz-Paket als Eingangsgrößen in die Hashfunktion eingehen, um einen Versions-Hash für die aktuelle Kartenversion zu erzeugen.

Mit Hilfe des erfindungsgemäßen Verfahrens wird in besonders einfacher Art und Weise das Verwalten und Nutzen verschiedener Kartenversionen ermöglicht. So lässt sich mit Hilfe des erfindungsgemäßen Verfahrens zum einen der zum Aktualisieren von digitalen Straßenkarten erforderliche Rechenaufwand und Speicherbedarf reduzieren, da zum Aktualisieren der als monolithischen Datensatz gespeicherten Basiskarte inkrementelle Aktualisierungen in Form der Kartendifferenz-Pakte angewendet werden. Zum anderen wird durch das Verwalten als Versionskette eine besonders hohe Flexibilität bei der Aktualisierung der digitalen Straßenkarten ermöglicht, sodass beliebige Versionsstände einer digitalen Straßenkarte mit beliebigen Kartendifferenz-Paketen ohne viel Aufwand kombiniert werden können.

Kerngedanke der Erfindung ist dabei die Verwaltung der digitalen Straßenkarte nach Art einer Blockchain. Die Basiskarte stellt dabei den Ausgangsblock dar, welcher durch die Verknüpfung mit Kartendifferenz-Paketen zu einer Versionskette unterschiedlicher Kartenversionen gewandelt wird. Im Vergleich zu einer Kryptowährung, wie beispielsweise Bitcoin, existiert dabei jedoch nicht nur eine einzelne Versionskette, sondern vielmehr können beliebig viele Versionsketten ausgehend von der Basiskarte erzeugt werden. Dabei können auch nach Möglichkeit unterschiedliche Kartenversionen miteinander kombiniert werden und so zu neuen Versionsketten zusammengefügt werden.

Eine Verlinkung von einer aktuellen Kartenversion zur vorigen Kartenversion ist erforderlich, da pro Kartenversion lediglich die Änderungen gespeichert werden. Jede Kartenversion ist durch eine einzigartige ID in Form des Versions-Hashes identifizierbar. Dies ermöglicht einen besonders einfachen Vergleich der unterschiedlichen Kartenversionen miteinander. Zudem gewährleistet die Verknüpfung der einzelnen Kartenversionen miteinander zur Versionskette unter Nutzung von Hashfunktionen den Schutz vor einer Manipulation der Daten. So können Änderungen nicht manipuliert werden und können zudem eindeutig zurückverfolgt werden. Die Verlinkung zur vorigen Kartenversion erfordert dabei lediglich das Speichern des Versions-Hashes der vorigen Kartenversion, wodurch die Speicheranforderungen der aktuellen Kartenversion reduziert werden.

Die Versionsänderungen sind wie bereits erwähnt modular, wodurch einzelne Kartendifferenz-Pakete beliebig miteinander kombiniert auf die Basiskarte appliziert werden können. Dies vereinfacht den Aufwand für einen Kartenanbieter zur Bereitstellung unterschiedlicher kundenspezifischer Kartenstränge deutlich. Anstatt die Basiskarte zu duplizieren und zukünftige Änderungen in beide Versionsstränge separat einzupflegen, ist es mit Hilfe des erfindungsgemäßen Verfahrens möglich, Kartendifferenzen automatisiert auf verschiedene Versionsketten anzuwenden.

Mit der Verfügbarkeit einer beliebigen Kartenversion ist implizit die Kartenhistorie ebenfalls verfügbar. Das bedeutet, dass alle Kartenversionen mit minimalem Speicherbedarf stets zur Verfügung stehen. Soll nun eine bestimmte Kartenversion genutzt werden, werden entsprechend die für die jeweilige Kartenversion zu applizierenden Kartendifferenz-Pakete auf die Basiskarte appliziert. Somit kann ausgehend von einer fehlerhaften digitalen Straßenkarte auf die letzte funktionstüchtige Kartenversion zurückgesprungen werden.

Das Berechnen des Versions-Hashes ist zudem mit einem vergleichsweise geringen Rechenaufwand möglich. So gehen in die Hashfunktion lediglich der Versions-Hash der vorigen Kartenversion und die zu applizierende Änderung ein. Hierzu wird wesentlich weniger Rechenkapazität benötigt als beispielsweise das Berechnen eines Hashes auf einen vollständigen monolithischen Datensatz einer Karte.

Die digitale Straßenkarte kann ferner auch in einzelne Kacheln unterteilt sein.

In einem Rechensystem können ein oder auch mehrere Basiskarten mitgeführt werden und das erfindungsgemäße Verfahren jeweils auf die einzelnen Basiskarten angewendet werden. Beispielsweise kann eine erste Basiskarte der geographischen Region eines ersten Landes, beispielsweise Deutschland, entsprechen und eine zweite Basiskarte einer zweiten geographischen Region wie zum Beispiel Frankreich. Gemäß einer Ausführungsform des erfindungsgemäßen Verfahrens, auf die später noch eingegangen wird, können die digitalen Straßenkarten in einem Fahrzeug genutzt werden, wodurch beispielsweise bei einer Reise einer fahrzeugführenden Person aus Deutschland nach Frankreich die für Frankreich genutzte Basiskarte beim Starten der Reise gemäß des erfindungsgemäßen Verfahrens aktualisiert oder angereichert wird.

Bei den Kartenmerkmalen handelt es sich um Kartenobjekte wie beispielsweise einzelne Straßenabschnitte, Knotenpunkte und dergleichen und den für diese Kartenobjekte gültigen Kartenobjekteigenschaften, beispielsweise ein für das jeweilige Kartenobjekt gültiges Tempolimit, Gefahrenhinweis, Geopositionsdaten oder dergleichen.

Eine vorteilhafte Weiterbildung des erfindungsgemäßen Verfahrens sieht vor, dass eine aktuelle Kartenversion nur dann in die Versionskette aufgenommen wird, wenn eine autorisierende Instanz die aktuelle Kartenversion freigibt. Hierdurch wird die Integrität der Versionskette gewahrt. So können beispielsweise von einem Entwicklerteam die Auswirkungen von neuen Kartendifferenz-Paketen auf verschiedene Kartenversionen untersucht werden und nur solche Kartendifferenz-Pakete für die Erzeugung aktueller Kartenversionen freigeben werden, bei denen die entsprechende aktuelle Kartenversion stabil läuft. Dieses Vorgehen wird auch als "Staging-Konzept" bezeichnet. Es wird also eine bestimmte Kartenversion eingefroren und als stabiler Zweig deklariert. Aktualisierungen werden dann auf einem sogenannten Entwicklungszweig fortgeführt. In den stabilen Zweig werden dann nur relevante und/oder kritische Änderungen übernommen. Bei der autorisierenden Instanz kann es sich beispielsweise um das Entwicklerteam oder ein Kartierungsbüro handeln.

Entsprechend einer weiteren vorteilhaften Ausgestaltung des Verfahrens werden die Basiskarte und die Kartendifferenz-Pakete in einer zentralen Datenbank auf einer zentralen Recheneinheit vorgehalten. Dies ermöglicht einen zentralen Zugriff auf die Basiskarte und die Kartendifferenz-Pakete, sodass die Basiskarte und die Kartendifferenz-Pakete gleichzeitig einer hohen Anzahl verschiedener Akteure zugänglich gemacht werden können. So können beispielsweise neue Kartendifferenz-Pakete in die zentrale Datenbank eingespielt werden und entsprechend an Kunden bzw. Anwender der digitalen Straßenkarte verteilt werden. Bei der zentralen Recheneinheit kann es sich beispielsweise um einen Cloudserver handeln. Beispielsweise kann der Cloudserver von einem Kartenhersteller oder auch einem Fahrzeughersteller betrieben werden.

Eine weitere vorteilhafte Ausgestaltung des erfindungsgemäßen Verfahrens sieht ferner vor, dass
- die Basiskarte in eine Recheneinheit eines Fahrzeugs eingebracht wird;
- eine Auswahl an Kartendifferenz-Paketen in die Recheneinheit des Fahrzeugs eingebracht wird;
- die digitale Straßenkarte in der Recheneinheit des Fahrzeugs durch Bilden wenigstens einer fortlaufenden Versionskette unter Anwendung zumindest einer Teilmenge der Auswahl an Kartendifferenz-Paketen versioniert wird; und
- eine aktuelle Kartenversion der digitalen Straßenkarte im Fahrzeug durch eine Fahrzeugfunktion angewendet wird.

Bei der Fahrzeugfunktion kann es sich beispielsweise um eine zumindest teilautomatisierte Betriebsweise des Fahrzeugs handeln, welche zur Steuerung des Fahrzeugs relevante Informationen aus der aktuellen Kartenversion ausliest. Eine weitere Fahrzeugfunktion könnte die Darstellung der aktuellen Kartenversion der digitalen Straßenkarte auf einer Anzeigeeinrichtung im Fahrzeug entsprechen.

Bevorzugt wird dabei eine geringere Anzahl an Kartendifferenz-Paketen in die Recheneinheit des Fahrzeugs eingebracht, als in der zentralen Datenbank vorgehalten werden. Hierdurch lässt sich der Speicherbedarf im Fahrzeug sowie eine zum Übertragen der Kartendifferenz-Pakete erforderliche Bandbreite reduzieren. Es werden dabei insbesondere für das Fahrzeug relevante Kartendifferenz-Pakte an die Recheneinheit übertragen. Zum Bestimmen relevanter Kartendifferenz-Pakete kann beispielsweise eine mit dem Fahrzeug geplante Reiseroute analysiert werden. Es werden dann für Kartenabschnitte, entlang denen die Reiseroute verläuft, gültige Kartendifferenz-Pakete aus der zentralen Datenbank in die Recheneinheit des Fahrzeugs übertragen. Generell ist es aber auch möglich, dass lediglich ein einzelnes Kartendifferenz-Paket an die Recheneinheit des Fahrzeugs übertragen wird.

Zur Generierung der aktuellen Kartenversion kann es bereits ausreichen, lediglich eine Teilmenge der an das Fahrzeug übertragenen Auswahl an Kartendifferenz-Paketen auf die entsprechende Basiskarte zu applizieren. Auch können mehrere Versionsketten erzeugt werden, wodurch im Fahrzeug besonders schnell und einfach zwischen verschiedenen aktuellen Kartenversionen hin und hergewechselt werden kann.

Entsprechend einer weiteren vorteilhaften Ausgestaltung des Verfahrens nutzt eine Recheneinheit im Fahrzeug eine aktuelle Kartenversion der digitalen Straßenkarte zur Ermittlung einer Navigationsroute von einem aktuellen Aufenthaltsort des Fahrzeugs zu einem Zielort. Dies ermöglicht eine besonders zuverlässige Navigationsführung, da somit immer eine aktuelle Kartenversion zur Berechnung der Navigationsroute verwendet wird. Das Fahrzeug kann generell eine oder auch mehrere Recheneinheiten umfassen. Dabei kann eine erste Recheneinheit zum Bevorraten der Basiskarte und der Kartendifferenz-Pakete sowie zum Erzeugen der fortlaufenden Versionskette der digitalen Straßenkarte vorgesehen sein und eine weitere Recheneinheit zur Durchführung der Navigation. Beide Funktionen können jedoch auch in ein und dieselbe Recheneinheit integriert sein.

Die Recheneinheit kann fest in das Fahrzeug integriert sein oder von einem mobilen Endgerät ausgebildet sein, welches mit einer fest in das Fahrzeug integrierten Recheneinheit kommuniziert. Bei dem mobilen Endgerät kann es sich beispielsweise um ein Smartphone handeln, auf dem eine Applikation ausgeführt wird, welche eine Durchführung des erfindungsgemäßen Verfahrens ermöglicht. Dabei kann das Smartphone mit der zentralen Recheneinheit, beispielsweise per Mobilfunk, kommunizieren.

Dies ermöglicht auch gemäß einer weiteren vorteilhaften Ausgestaltung des erfindungsgemäßen Verfahrens das drahtlose Einbringen der Basiskarte und/oder der Auswahl an Kartendifferenz-Paketen in die Recheneinheit des Fahrzeugs. Generell ist es jedoch auch denkbar, dass die Basiskarte und/oder eine Auswahl an Kartendifferenz-Paketen kabelgebunden, beispielsweise während eines Wartungsintervalls des Fahrzeugs, in die Recheneinheit eingebracht wird. Kabelgebunden schließt in diesem Zusammenhang das Lesen eines beliebigen physischen Speichermediums durch die Recheneinheit ein, wie beispielsweise das Lesen einer SO-Karte, eines USB-Sticks, eines optischen Speichermediums wie einer DVD oder einer Blu-ray oder dergleichen.

Eine Kommunikation zwischen der Recheneinheit des Fahrzeugs und der zentralen Recheneinheit kann auch über eine drahtlose Kommunikationsschnittstelle, beispielsweise eine fest in das Fahrzeug verbaute Telematikeinheit, erfolgen. Neben Mobilfunk kommen zur Kommunikation beliebige drahtlose Kommunikationstechnologien wie beispielsweise Bluetooth, NFC, WLAN, insbesondere unter Nutzung des WI-FI-Standards, und dergleichen in Frage.

Erfindungsgemäß ist bei einem Fahrzeug mit einer Recheneinheit die Recheneinheit zur Durchführung eines im vorigen beschriebenen Verfahrens eingerichtet. Bei dem Fahrzeug kann es sich um ein beliebiges Fahrzeug wie einen Pkw, Lkw, Transporter, Bus oder dergleichen handeln. Das Fahrzeug kann wenigstens eine zumindest teilautomatisierte Fahrfunktion aufweisen, insbesondere eine solche Fahrfunktion, die auf die Bereitstellung und Verarbeitung aktueller Kartendaten angewiesen ist.

Weitere vorteilhafte Ausgestaltungen des erfindungsgemäßen Verfahrens zur Versionierung von digitalen Straßenkarten mittels inkrementeller Aktualisierungen und des Fahrzeugs ergeben sich aus den Ausführungsbeispielen, welche nachfolgend unter Bezugnahme auf die Figuren näher beschrieben werden.

Dabei zeigen:
- Fig. 1: ein schematisierter Verfahrensablauf zur Versionierung digitaler Straßenkarten mittels inkrementeller Aktualisierungen gemäß eines bekannten Vorgehens;
- Fig. 2: eine schematisierte Detailansicht eines Kartendifferenz-Pakets;
- Fig. 3: eine schematisierte Darstellung eines zu speichernden Datensatzes einer digitalen Straßenkarte, wenn die digitale Straßenkarte gemäß eines erfindungsgemäßen Verfahrens aktualisiert wird;
- Fig. 4: ein schematisierter Ablauf zur Erzeugung einer Versionskette aufeinander folgender Kartenversionen;
- Fig. 5: eine schematisierte Ansicht eines zur Durchführung des erfindungsgemäßen Verfahrens genutzten Ökosystems; und
- Fig. 6: eine schematisierte Darstellung der Erzeugung verschiedener Versionsketten der digitalen Straßenkarte in einem Fahrzeug.

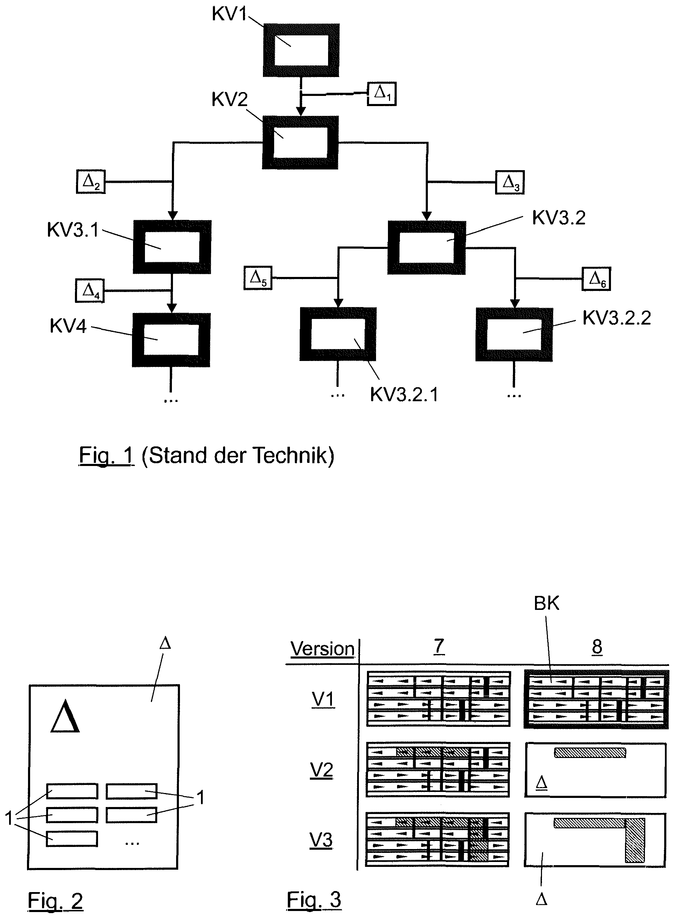

Figur 1 zeigt den Ablauf zur Erzeugung verschiedener Versionen einer digitalen Straßenkarte mittels inkrementeller Aktualisierungen, wie aus dem Stand der Technik bekannt. Monolithische Datensätze, also zusammenhängende vergleichsweise große Dateien zur Ausbildung einer digitalen Straßenkarte, sind dabei in den Figuren durch Kästchen mit einer dicken schwarzen Umrandung symbolisiert. Wie Figur 1 zeigt, wird eine erste Kartenversion KV1 einer digitalen Straßenkarte durch das Einspielen eines ersten Kartendifferenz-Pakets Δ₁ auf eine neue Version aktualisiert. Dabei werden lediglich zu ändernde Kartenmerkmale der ersten Kartenversion KV1 geändert. Hierdurch wird der Versionsbezeichner der digitalen Straßenkarte erhöht, sodass eine zweite Kartenversion KV2 entsteht. Die zweite Kartenversion KV2 wird dann ebenfalls als monolithischer Datenblock abgespeichert.

Analog wird durch Einspielen eines zweiten Kartendifferenz-Pakets Δ₂ die zweite Kartenversion KV2 auf eine erste dritte Kartenversion KV3 aktualisiert. Für eine dritte Kartenversion KV3 sollen verschiedene Varianten erzeugt werden, beispielsweise für verschiedene Anwendungszwecke oder verschiedene Kunden. So wird ein drittes Kartendifferenz-Paket Δ₃ auf die zweite Kartenversion KV2 angewendet, um neben einer ersten zweiten Kartenversion KV3.1 noch eine zweite dritte Kartenversion KV3.2 zu erzeugen. Dieses Vorgehen wird auch als "Forken" bezeichnet.

Durch das Einspielen eines vierten, fünften und sechsten Kartendifferenz-Pakets Δ₄, Δ₅, Δ₆ werden analog weitere Kartenversionen KV4, KV3.2.1 und KV3.2.2 erzeugt. Dies ist mit einem vergleichsweise hohen Aufwand verbunden, da jegliche Kartenversionen von einem monolithischen Datensatz ausgebildet werden und entsprechend Aktualisierungen auf diese eingespielt werden müssen, um diese zu pflegen. Zudem ist ein hoher Speicherbedarf erforderlich, da jede Kartenversion KV1, KV2, KV3.1, KV3.2, KV4, KV3.2.1, KV3.2.2 als monolithischer Datensatz abgespeichert werden muss.

Figur 2 zeigt eine detailliertere Ansicht eines Kartendifferenz-Pakets Δ. Ein Kartendifferenz-Paket Δ umfasst zumindest eine Einzeländerung 1 eines Kartenmerkmals. Ein Kartendifferenz-Paket Δ kann jedoch auch, wie in Figur 2 dargestellt, mehrere Einzeländerungen 1 für unterschiedliche Kartenmerkmale umfassen. Generell ist es dabei auch möglich, dass ausschließlich jedes Kartendifferenz-Paket Δ eine einzige Einzeländerung 1 umfasst.

Bei einem Kartenmerkmal handelt es sich um eine Kombination aus Kartenobjekt, also beispielsweise einen Straßenabschnitt, einen Knotenpunkt, ein Verkehrszeichen, eine Lichtsignalanlage oder dergleichen und für das jeweilige Kartenobjekt gültige Kartenobjekteigenschaften, also beispielsweise ein gültiges Tempolimit, eine Fahrtrichtung, ein Zeitabschnitt, eine Geoposition oder dergleichen.

Mit Hilfe eines erfindungsgemäßen Verfahrens ist es möglich, den Aufwand zur Erzeugung, Verwaltung und Nutzung unterschiedlicher Versionen der digitalen Straßenkarte erheblich zu reduzieren. So zeigt Figur 3 eine schematisierte Darstellung eines zu speichernden Datensatzes der digitalen Straßenkarte. Die Darstellung erfolgt tabellarisch, wobei die erste Spalte der Tabelle einen Versionsbezeichner Version der digitalen Straßenkarte zeigt, die zweite Spalte einen vollständigen Datensatz 7, und die dritte Spalte die jeweils zu speichernde Versionsänderung 8. Wie zu erkennen ist, wird in der ersten Version V1 die komplette digitale Straßenkarte als monolithischer Datensatz in Form einer Basiskarte BK gespeichert. Zur Aktualisierung auf eine zweite Version V2 wird eine Änderung auf die digitale Straßenkarte eingespielt. Dabei wird lediglich die in der zweiten Zeile und dritten Spalte gezeigte Änderung in Form eines Kartendifferenz-Pakets Δ abgespeichert. Analog wird für eine dritte Version V3 lediglich die in der dritten Zeile und dritten Spalte gezeigte Änderung abgespeichert. Es müssen somit für verschiedene Versionen der Karte jeweils keine vollständigen monolithischen Datensätze gespeichert werden, sondern lediglich der monolithische Datensatz der Basiskarte BK sowie die durch die Kartendifferenz-Pakete Δ zu applizierenden Änderungen. Dies ermöglicht eine besonders effiziente Datenverwaltung bezüglich der zu übertragenden und abzuspeichernden Datenmengen.

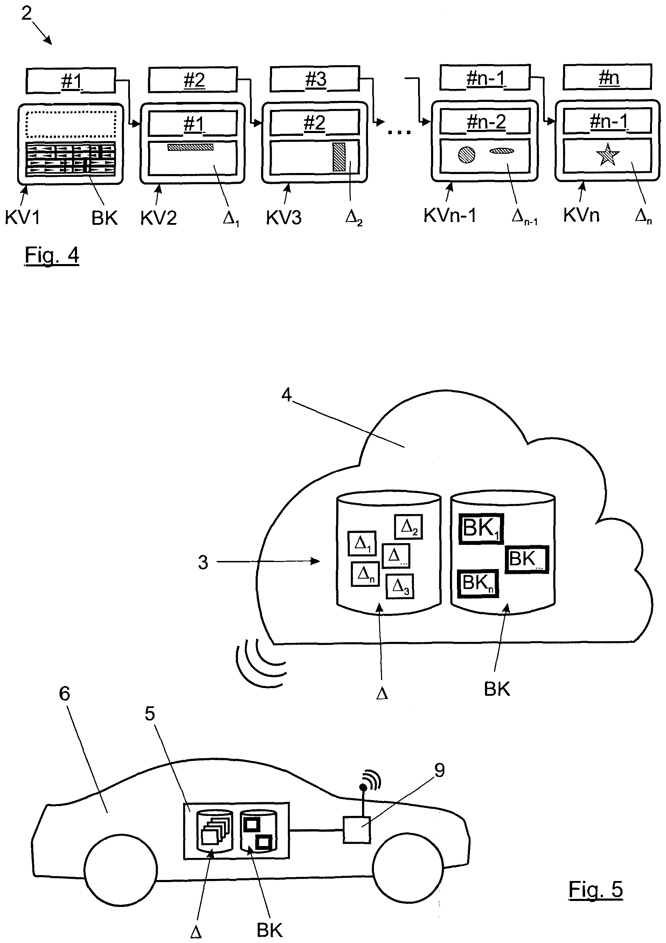

Erfindungsgemäß werden zur Erzeugung einer aktuellen Kartenversion KVn die einzelnen Kartenversionen der digitalen Straßenkarte in Form einer Versionskette 2 aneinander gereiht, wie in Figur 4 dargestellt. Hierzu wird ein Versions-Hash #n-1 einer vorigen Kartenversion KVn-1 und ein zu applizierendes Kartendifferenz-Paket Δn als Eingangsgröße in eine Hashfunktion eingelesen, um einen Versions-Hash #n für die aktuelle Kartenversion KVn zu erzeugen. Das in Figur 4 gezeigte Vorgehen beginnt dabei mit der Basiskarte BK und der Erzeugung eines ersten Versions-Hashes #1. Die Basiskarte BK stellt dabei eine erste Kartenversion KV1 dar. Der erste Versions-Hash #1 wird mit einem ersten Kartendifferenz-Paket Δ₁ in die Hashfunktion eingelesen, um einen zweiten Versions-Hashes #2 zu erzeugen. Der erste Versions-Hash #1 und das erste Kartendifferenz-Paket Δ₁ bilden dabei eine zweite Kartenversion KV2 aus.

Analog gehen der zweite Versions-Hash #2 und ein zweites Kartendifferenz-Paket Δ₂ zur Ausbildung einer dritten Kartenversion KV3 in die Hashfunktion ein, um einen dritten Versions-Hash #3 zu erzeugen.

Das Vorgehen zur Erzeugung der Versionskette 2 lässt sich somit mit dem Erzeugen einer Blockchain vergleichen. Das Erzeugen von Versions-Hashes auf die jeweiligen Kartenversionen stellt dabei sicher, dass Änderungen einer digitalen Straßenkarte nicht manipuliert werden können und eindeutig zurückverfolgt werden können.

Figur 5 zeigt ein zur Durchführung des erfindungsgemäßen Verfahrens verwendetes Ökosystem. Dieses umfasst eine zentrale Recheneinheit 4, beispielsweise einen Cloudserver, der eine zentrale Datenbank 3 umfasst. In der zentralen Datenbank 3 werden die Basiskarte BK und die unterschiedlichen Kartendifferenz-Pakete Δ gespeichert. In Figur 5 ist dabei eine Vielzahl verschiedener Kartendifferenz-Pakete Δ gezeigt, wobei unterschiedliche Kartendifferenz-Pakete durch eine unterschiedliche Ziffer im Index symbolisiert sind. Die zentrale Datenbank 3 kann zum Speichern verschiedener Basiskarten BK verwendet werden. Beispielsweise sind in der zentralen Datenbank 3 eine erste Basiskarte BK1 und eine zweite Basiskarte BK2 gespeichert. Dabei kann eine jeweilige Basiskarte BK1, BK2 eine digitale Straßenkarte einer unterschiedlichen geographischen Region, beispielsweise verschiedener Länder, ausbilden.

Das erfindungsgemäße Verfahren wird dazu genutzt, eine in einem Fahrzeug 6 gespeicherte digitale Straßenkarte zu aktualisieren. Hierzu umfasst das Fahrzeug 6 eine Recheneinheit 5, in der zumindest eine Basiskarte BK und zumindest eine Auswahl der Kartendifferenz-Pakete Δ gespeichert werden. Zur Kommunikation mit der zentralen Recheneinheit 4 verfügt das Fahrzeug 6 über eine drahtlose Kommunikationsschnittstelle 9.

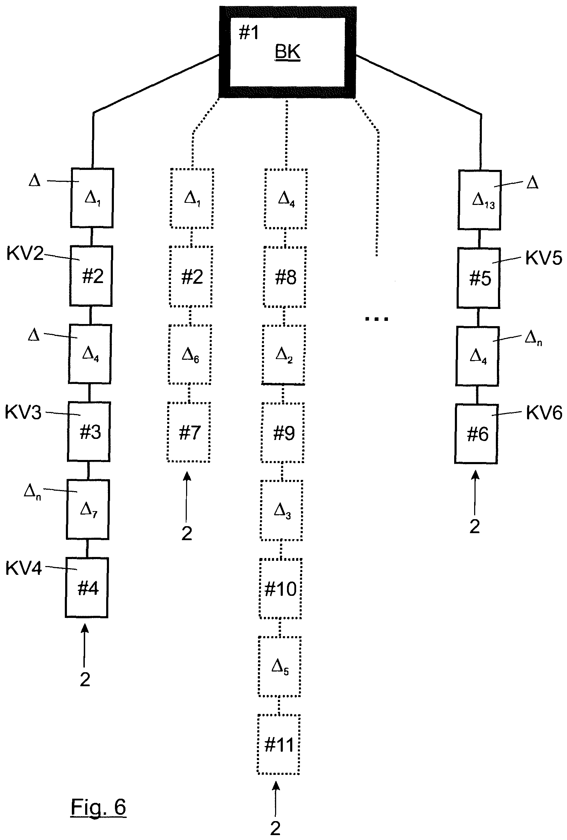

Im Fahrzeug 6 können, wie Figur 6 zeigt, eine oder auch mehrere unterschiedliche Versionsketten 2 gemäß des in Figur 4 gezeigten Vorgehens erzeugt werden. Hierzu wird auf die in der Recheneinheit 5 gespeicherte Auswahl der Kartendifferenz-Pakete Δ zurückgegriffen. Für die jeweiligen Versionsketten 2 können dabei verschiedene Kombinationen an Kartendifferenz-Paketen Δ verwendet werden. Im Fahrzeug aktiv genutzte Versionsketten 2 sind in Figur 6 durch eine durchgezogene Linie symbolisiert und erzeugbare Versionsketten 2 durch eine gestrichelte Linie.

Wie dargestellt ist es möglich, dass auch mehr als eine Versionskette 2 gleichzeitig im Fahrzeug 6 genutzt wird. So können beispielsweise unterschiedliche Fahrzeugfunktionen unterschiedliche Kartenversionen verwenden. Beispielsweise kann ein Navigationssystem auf eine vierte Kartenversion KV4 und ein System zum Ableiten automatisierter Steuerungsbefehle für das Fahrzeug 6 auf eine sechste Kartenversion KV6 zugreifen. Zur Erzeugung der vierten Kartenversion KV4 und sechsten Kartenversion KV6 wurden dabei in den jeweiligen Versionsketten 2 die zweite und dritte Kartenversion KV2 und KV3 sowie eine fünfte Kartenversion KV5 erzeugt. Dadurch, dass nur eine einzige Basiskarte BK als monolithisches Datenpaket vorgehalten werden muss, lässt sich somit der im Fahrzeug 6 vorhandene Speicherplatz besonders effizient ausnutzen. Zudem lassen sich neue Aktualisierungen besonders schnell und zuverlässig einspielen. Für verschiedene Anwendungsfälle kann besonders schnell und einfach zwischen verschiedenen Kartenversionen gewechselt werden.

## Patentansprüche

1. Verfahren zur Versionierung von digitalen Straßenkarten mittels inkrementeller Aktualisierungen, aufweisend die folgenden Verfahrensschritte:
- Bereitstellen einer Basiskarte (BK);
- Anwenden einer Hashfunktion auf die Basiskarte (BK) zur Erzeugung eines Versions-Hashes (#1) der Basiskarte (BK);
- Bereitstellen von Kartendifferenz-Paketen (Δ), wobei ein Kartendifferenz-Paket (Δ) wenigstens eine Einzeländerung (1) eines Kartenmerkmals umfasst;
- Versionierung der digitalen Straßenkarte durch Bilden wenigstens einer fortlaufenden Versionskette (2), beginnend mit der Basiskarte (BK), wobei hierzu:
- Zur Erzeugung einer aktuellen Kartenversion (KVn) ein zu applizierendes Kartendifferenz-Paket (Δn) mit der in der Versionskette (2) vor der aktuellen Kartenversion (KVn) befindlichen Kartenversion (KVn-1) verknüpft wird, wobei hierzu der Versions-Hash (#n-1) der vorigen Kartenversion (KVn-1) und das zu applizierende Kartendifferenz-Paket (Δn) als Eingangsgrößen in die Hashfunktion eingehen, um einen Versions-Hash (#n) für die aktuelle Kartenversion (KVn) zu erzeugen.

2. Verfahren nach Anspruch 1,
**dadurch gekennzeichnet, dass**
eine aktuelle Kartenversion (KVn) nur dann in die Versionskette (2) aufgenommen wird, wenn eine autorisierende Instanz die aktuelle Kartenversion (KVn) freigibt.

3. Verfahren nach Anspruch 1 oder 2,
**dadurch gekennzeichnet, dass**
die Basiskarte (BK) und die Kartendifferenz-Pakete (Δ) in einer zentralen Datenbank (3) auf einer zentralen Recheneinheit (4) vorgehalten werden.

4. Verfahren nach einem der Ansprüche 1 bis 3,
**dadurch gekennzeichnet, dass**
- die Basiskarte (BK) in eine Recheneinheit (5) eines Fahrzeugs (6) eingebracht wird;
- eine Auswahl an Kartendifferenz-Paketen (Δ) in die Recheneinheit (5) des Fahrzeugs (6) eingebracht wird;
- die digitale Straßenkarte in der Recheneinheit (5) des Fahrzeugs (6) durch Bilden wenigstens einer fortlaufenden Versionskette (2) unter Anwendung zumindest einer Teilmenge der Auswahl an Kartendifferenz-Paketen (Δ) versioniert wird; und
- eine aktuelle Kartenversion (KVn) der digitalen Straßenkarte im Fahrzeug (6) durch eine Fahrzeugfunktion angewendet wird.

5. Verfahren nach Anspruch 4,
**dadurch gekennzeichnet, dass**
eine Recheneinheit (5) im Fahrzeug (6) eine aktuelle Kartenversion (KVn) der digitalen Straßenkarte zur Ermittlung einer Navigationsroute von einem aktuellen Aufenthaltsort des Fahrzeugs (6) zu einem Zielort nutzt.

6. Verfahren nach einem der Ansprüche 4 bis 5,
**dadurch gekennzeichnet, dass**
die Basiskarte (BK) und/oder die Auswahl an Kartendifferenz-Paketen (Δ) drahtlos in die Recheneinheit (5) des Fahrzeugs (6) eingebracht wird.

7. Fahrzeug (6) mit einer Recheneinheit (5),
wobei die Recheneinheit (5) zur Ausführung eines Verfahrens nach einem der Ansprüche 1 bis 6 eingerichtet ist.

## Claims

1. Method for versioning digital road maps by means of incremental updates, comprising the following method steps:
- providing a base map (BK);
- applying a hash function to the base map (BK) to generate a version hash (#1) of the base map (BK);
- providing map difference packets (Δ), wherein a map difference packet (Δ) comprises at least one individual change (1) to a map feature;
- versioning the digital road map by forming at least one continuous version chain (2), starting with the base map (BK), wherein for this purpose:
- to generate a current map version (KVn), a map difference packet (Δn) to be applied is linked to the map version (KVn-1) located before the current map version (KVn) in the version chain (2), wherein for this purpose the version hash (#n-1) of the previous map version (KVn-1) and the map difference packet (Δn) to be applied are entered as input variables into the hash function in order to generate a version hash (#n) for the current map version (KVn).

2. Method according to claim 1,
**characterized in that**
a current map version (KVn) is only included in the version chain (2) if an authorizing instance releases the current map version (KVn).

3. Method according to claim 1 or claim 2,
**characterized in that**
the base map (BK) and the map difference packets (Δ) are stored in a central database (3) on a central computing unit (4).

4. Method according to any of claims 1 to 3,
**characterized in that**
- the base map (BK) is introduced into a computing unit (5) of a vehicle (6);
- a selection of map difference packets (Δ) is introduced into the computing unit (5) of the vehicle (6);
- the digital road map is versioned in the computing unit (5) of the vehicle (6) by forming at least one continuous version chain (2) using at least some of the selection of map difference packets (Δ); and
- a current map version (KVn) of the digital road map is used in the vehicle (6) by a vehicle function.

5. Method according to claim 4,
**characterized in that**
a computing unit (5) in the vehicle (6) uses a current map version (KVn) of the digital road map to determine a navigation route from a current location of the vehicle (6) to a target location.

6. Method according to either of claims 4 to 5,
**characterized in that**
the base map (BK) and/or the selection of map difference packets (Δ) are wirelessly introduced into the computing unit (5) of the vehicle (6).

7. Vehicle (6) comprising a computing unit (5),
wherein
the computing unit (5) is designed to carry out a method according to any of claims 1 to 6.

## Revendications

1. Procédé pour le versionnage de cartes routières numériques au moyen de mises à jour incrémentielles, présentant les étapes de procédé suivantes :
- mise à disposition d'une carte de base (BK) ;
- application d'une fonction de hachage à la carte de base (BK) permettant de générer un hachage de version (#1) de la carte de base (BK) ;
- fourniture de paquets de différence de carte (Δ), dans lequel un paquet de différence de carte (Δ) comprend au moins une modification unique (1) d'une caractéristique de carte ;
- versionnage de la carte routière numérique en formant au moins une chaîne de versions (2) continue commençant par la carte de base (BK), dans lequel, à cet effet :
- pour la génération d'une version de carte actuelle (KVn), un paquet de différence de carte à appliquer (Δn) est combiné à la version de carte (KVn-1) se trouvant avant la version de carte actuelle (KVn) dans la chaîne de versions (2), dans lequel, à cet effet, le hachage de version (#n-1) de la version de carte (KVn-1) précédente et le paquet de différence de carte à appliquer (Δn) sont entrés comme grandeurs d'entrée dans la fonction de hachage afin de générer un hachage de version (#n) pour la version de carte actuelle (KVn).

2. Procédé selon la revendication 1,
**caractérisé en ce que**
une version de carte actuelle (KVn) est intégrée dans la chaîne de versions (2) uniquement si une instance faisant autorité libère la version de carte actuelle (KVn).

3. Procédé selon la revendication 1 ou 2,
**caractérisé en ce que**
la carte de base (BK) et les paquets de différence de carte (Δ) sont conservés dans une base de données centrale (3) sur une unité de calcul centrale (4).

4. Procédé selon l'une des revendications 1 à 3,
**caractérisé en ce que**
- la carte de base (BK) est introduite dans une unité de calcul (5) d'un véhicule (6) ;
- une sélection de paquets de différence de carte (Δ) est introduite dans l'unité de calcul (5) du véhicule (6) ;
- la carte routière numérique est versionnée dans l'unité de calcul (5) du véhicule (6) en formant au moins une chaîne de versions continue (2) en appliquant au moins une partie d'un ensemble de la sélection de paquets de différence de carte (Δ) ; et
- une version de carte actuelle (KVn) de la carte routière numérique est appliquée dans le véhicule (6) par une fonction de véhicule.

5. Procédé selon la revendication 4,
**caractérisé en ce que**
une unité de calcul (5) dans le véhicule (6) utilise une version de carte actuelle (KVn) de la carte routière numérique pour la détermination d'un itinéraire de navigation d'un lieu d'arrêt actuel du véhicule (6) à un lieu de destination.

6. Procédé selon l'une des revendications 4 à 5,
**caractérisé en ce que**
la carte de base (BK) et/ou la sélection de paquets de différence de carte (Δ) est entrée sans fil dans l'unité de calcul (5) du véhicule (6).

7. Véhicule (6) comportant une unité de calcul (5),
dans lequel
l'unité de calcul (5) est configurée pour la mise en œuvre d'un procédé selon l'une des revendications 1 à 6.
